# EUROPÄISCHE PATENTSCHRIFT

(11) **EP 1 996 421 B1**
(45) Veröffentlichungstag und Bekanntmachung des Hinweises auf die Patenterteilung: **11.06.2014**
(21) Anmeldenummer: 07723192.6
(22) Anmeldetag: 12.03.2007
(51) Int. Cl.: B60J 7/02, B60R 13/02

(54) **AUSSTATTUNGSTEIL FÜR EIN KRAFTFAHRZEUG MIT EINER ÖFFNUNG UND EINEM ANLAGETEIL**
DECORATIVE PART FOR A MOTOR VEHICLE, COMPRISING AN OPENING AND A SUPPORTING ELEMENT
ÉLÉMENT DE GARNITURE POUR UN VÉHICULE AUTOMOBILE POURVU D'UNE OUVERTURE ET D'UN ÉLÉMENT D'APPUI

(30) Priorität: 15.03.2006 DE 102006012252
(43) Veröffentlichungstag der Anmeldung: 03.12.2008
(73) Patentinhaber: Johnson Controls Headliner GmbH, 66802 Uberherrn (DE)
(72) Erfinder: ZIPPEL, Ingo, 50858 Köln (DE); COLOMBAIN, Benoit, 67500 Haguenau (FR)
(74) Vertreter: Trinks, Ole
(86) Internationale Anmeldenummer: PCT/EP2007/002147
(87) Internationale Veröffentlichungsnummer: WO 2007/104516

(56) Entgegenhaltungen:
- EP-A- 1 088 749
- EP-A1- 0 380 013
- DE-A1- 3 419 901
- DE-A1- 4 230 082
- DE-C1- 4 142 267
- DE-C1- 19 804 144
- US-A- 4 893 868
- US-A1- 2005 006 929

## Beschreibung

Die vorliegende Ereindung betrifft ein Ausstattungsteil für ein Kraftfahrzeuge, insbesondere Kraftfahrzeuginnenausstattungsteil, wobei das Ausstattungsteil eine Sichtseite und eine Rückseite aufweist, wobei das Ausstattungsteil einen Träger umfasst, wobei das Ausstattungsteil auf der Sichtseite eine Dekormaterial aufweist, wobei der Träger eine Öffnung aufweist und wobei das Dekormaterial im Bereich der Öffnung auf der Rückseite des Ausstattungsteils eine Umbugkante bildend umgebogen vorgesehen ist.

Solche Ausstattungsteile sind im Kraftfahrzeugbau, insbesondere zur Herstellung von Öffnungen für elektrische Schiebedächer, allgemein bekannt. US 2005/0006929 A1 offenbart ein Ausstattungsteil für ein Fahrzeug gemäß dem Oberbegriff des Anspruchs 1. Weiterhin ist aus der Patentschrift DE 32 22 419 C1 bekannt, einen Dachaufbau für Kraftfahrzeuge mit einem Schiebedach in besonderer Weise derart auszugestalten, dass die Stabilität des Dachaufbaus durch das Schiebedach nicht herabgesetzt wird. Bei bekannten Ausstellungsteilen für ein Kraftfahrzeug ist es üblicherweise so, dass eine Öffnung in einem Trägermaterial für Dachhimmel erzeugt wird und anschließend ein Dekormaterial, beispielsweise ein gepolstertes Stoff- oder Kunstledermaterial oder dergleichen zum die in das Trägerteilmaterial eingebrachte Öffnung umgebogen wird, damit der Übergang zwischen dem Dachhimmel und dem Schiebedach möglichst ästhetisch gestaltet werden kann. Problematisch bei bisherigen Ausstattungsteiten für Kraftfahrzeuge ist es, dass die Öffnungen beispielsweise für Schiebedächer in dem Trägermaterial zur Stabilisierung des Dachhimmels nur mit einer erheblich größeren Toleranz effizient und kostengünstig herstellbar sind, so dass es beim Einsetzen des Rahmens für das Schiebedach zu untolerierbaren Ungenauigkeiten hinsichtlich der Maßtoleranz zwischen dem Innenausstattungsteil und dem Schiebedach kommt. Zur Lösung dieses Problems wurde im Stand der Technik vorgeschlagen, dass die Genauigkeit bei der Einbringung der Öffnung in das Trägermaterial des Dachhimmels vergrößert wird. Dies ist jedoch mit erheblichen Mehrkosten entweder durch die Verwendung von speziellen Maschinen oder aber durch die Durchführung von manuell durchzuführenden Nacharbeiten an der Öffnung des Dächhimmels verbunden.

Aufgabe der vorliegenden Erfindung ist es daher, ein Ausstattungsteil für eine Kraftfahrzeug zu schaffen, welches eine Öffnung aufweist, die mit geringen Kostenaufwand eine erheblich größere Maßgenauigkeit der Abmessungen der Öffnung realisiert, als es gemäß dem Stand der Technik möglich war.

Diese Aufgabe wird mittels eines Ausstattungsteil für eine Kraftfahrzeug insbesondere Kraftfahrzeuginnenausstattungsteil nach Anspruch 1, gelöst, wobei das Ausstattungsteil eine Sichtseite und eine Rückseite aufweist, wobei das Ausstattungsteil einen Träger umfasst, wobei das Ausstattungsteil auf der Sichtseite ein Dekormaterial aufweist, wobei der Träger eine Öffnung aufweist und wobei das Dekormaterial im Bereich der Öffnung auf der Rückseite des Ausstattungsteils eine Umbugkante bildend umgebogen vorgesehen ist, wobei ferner im Bereich der Öffnung ein mit dem Träger verbundenes Anlageteil vorgesehen ist, wobei das Anlageteil zur Bildung der Umbugkante des Dekormaterials vorgesehen ist. Hierdurch ist es erfindungsgemäß vorteilhaft möglich, dass zum einen für den weitaus größten Teil der Fläche des Ausstattungsteils der Träger als stabilisierendes Element des Ausstattungsteils mit allen Vorteilen hinsichtlich des Gewichts oder dergleichen möglich ist und dennoch im Bereich der Öffnung eine hohe Maßtoleranz bzw. Maßgenauigkeit durch die Verbindung des Trägers mit dem Anlageteil erzielt werden kann. Hierdurch ist eine sehr effiziente und kostengünstige Realisierung eines Ausstattungsteil für ein Kraftfahrzeug, insbesondere ein Dachhimmel eines Fahrzeugs im Bereich einer Öffnung für ein Fahrzeugschiebedach, möglich.

Erfindungsgemäß ist bevorzugt, dass das Anlageteil rahmenförmig an der Öffnung umlaufend vorgesehen ist. Hierdurch ist die Montage des Anlageteils zum einen mit lediglich geringem Aufwand möglich und zum anderen mit einer sehr hohen Positioniergenauigkeit möglich, weil eine einzelne Positionierung des Anlageteils relativ zum Träger notwendig ist um die genau Definition der Öffnung zu erzielen. Weiterhin wird das Ausstattungsteil durch eine rahmenförmig vorgesehenes Anlageteil mechanisch im Bereich der Öffnung verstärkt.

Erfindungsgemäß ist das Anlageteil aus einem ersten Material und der Träger des Ausstattungsteil aus einem zweiten Material vorgesehen, wobei übliche Maßtoleranzen für das erste Material kleiner sind als für das zweite Material. Hierdurch kann ein erheblicher Genauigkeitszugewinn durch die Verwendung des Anlageteils im Bereich der Öffnung erzielt werden. Bevorzugt ist das erste Material ein Metallmaterial, insbesondere ein gestanztes Metallmaterial, beispielsweise Stahlblech oder dergleichen, was mit etablierten Herstellungsmethoden mit einer sehr großen Maßgenauigkeit bzw. mit der geringen Toleranzen hinsichtlich der Abmessung hergestellt werden kann. Erfindungsgemäß ist das zweite Material ein Kunststoffmaterial mit einem Faseranteil von natürlichen oder künstlichen Fasern. Beispielsweise handelt, es sich bei dem zweiten Material um ein Verbundmaterial mit einem Kunststoffanteil und mit einem aus natürlichen bzw. nachwachsenden Rohstoffen hergestellten Anteil.

Erfindungsgemäß ist ferner bevorzugt, dass zwischen dem Rand des Trägers im Bereich der Öffnung und dem Anlageteil ein Toleranzausgleichabstand vorgesehen ist. Hierdurch ist es erfindungsgemäß vorteilhaft möglich, dass die insgesamt erzielbare Genauigkeit erheblich verbessert wird, obwohl die Toleranzen bei der Formgebung beispielsweise des Trägers für das Ausstattungsteil vergleichsweise groß sind, was zu einer kostengünstigen Herstellungsmöglichkeit führt. Ferner weist erfindungsgemäß das Dekormaterial eine Polsterschicht auf, so dass der Toleranzausgleichsabstand ohne ästhetische Beeinträchtigung überbrückt werden kann.

Erfindungsgemäß ist es ferner bevorzugt, dass das Anlageteil im Querschnitt im Wesentlichen L-förmig vorgesehen ist. Hierdurch ist eine besonders einfache Formgebung des Anlageteils möglich, was zu einer kostengünstigen Herstellbarkeit des Anlageteils und damit insgesamt des Ausstattungsteils beiträgt.

Die Erfindung wird nachfolgend anhand von in der Zeichnung dargestellten Ausführungsbeispielen näher erläutert.

Es zeigen
- **Figur 1**: eine Schnittdarstellung durch ein erfindungsgemäßes Ausstattungsteil im Bereich einer Öffnung,
- **Figur 2**: eine Schnittdarstellung im Bereich der Öffnung durch ein schematisch dargestelltes Ausstattungsteil mit der gesamten Öffnung,
- **Figur 3**: eine schematische Darstellung einer Draufsicht auf ein Kraftfahrzeugdach mit einem erfindungsgemäßen Ausstattungsteil und
- **Figur 4**: eine weitere Schnittdarstellung durch das Ausstattungsteil im Bereich der Öffnung im dem Ausstattungsteil.

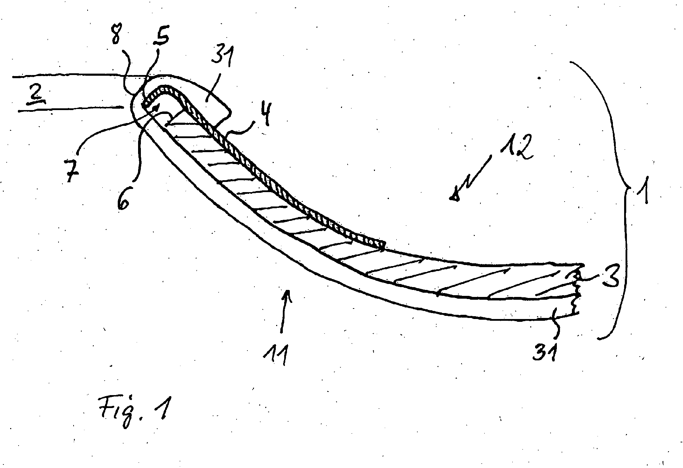

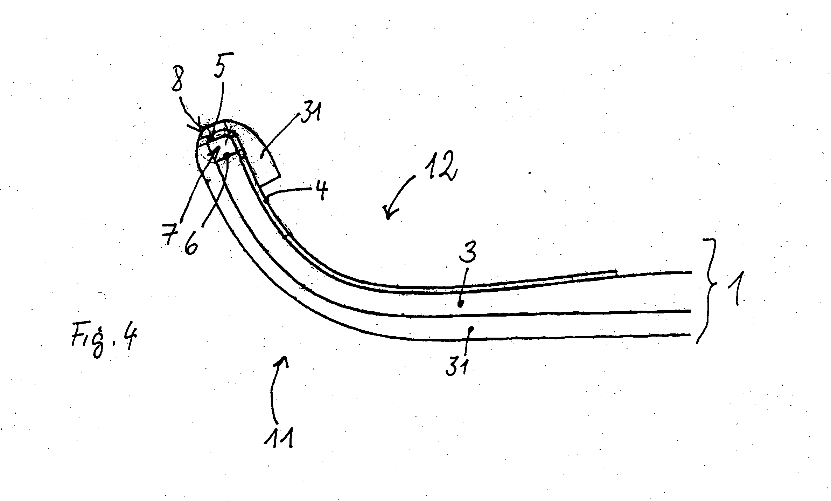

In den Figuren 1 und 4 ist eine schematische Darstellung einer Schnittdarstellung eines erfindungsgemäßen Ausstattungsteils 1 dargestellt. Das Ausstattungsteil 1 weist einen Träger 3 auf, der auch als Trägerteil bzw. als Trägerformteil bezeichnet wird. Der Träger 3 ist insbesondere aus einem für die Anwendungszwecke des Ausstattungsteils 1 optimierten zweiten Material hergestellt, welche insbesondere vergleichsweise leicht ist und weiterhin sonstige Anforderungen wie beispielsweise schlechte Entflammbarkeit oder dergleichen aufweist. Der Träger 3 ist als Grundlage für die ästhetisch einwandfrei Anordnung eines Dekormaterials 31 vorgesehen, welches auf einer Sichtseite 11 des Trägers 3 angebracht ist. Der Träger 3 weist darüber hinaus auf der der Sichtseite 11 gegenüberliegenden Seite eine Rückseite 12 auf. Der Träger 3 weist ferner eine Öffnung 2 auf, die insbesondere innerhalb des Träges 3 umlaufend vorgesehen ist. Es kann jedoch erfindungsgemäß auch vorgesehen sein, dass sich die Öffnung an einem Rand des Trägers 3 befindet. Im Bereich der Öffnung 2 weist der Träger 3 einen Rand 6 bzw. eine Schnittkante 6 auf. Durch die Schnittkante 6 bzw. durch den Rand 6 ist die Öffnung 2 in den Träger 3 und damit in das Ausstattungsteil 1 eingebracht. Es ist nun erfindungsgemäß so, dass das zweite Material des Trägers 3 nur mit verhältnismäßig großem Aufwand mit einer geringen Maßtoleranz bzw. mit einer hohen Maßgenauigkeit herstellbar ist. Dies hat beispielsweise damit zu tun, dass das für den Träger 3 verwendete Material sich im weiteren Herstellungsprozess noch verziehen kann oder dergleichen Formänderungen aufweisen kann. Aus diesem Grund ist es zumindest wirtschaftlich nicht sinnvoll möglich, allein die Kante 6 zur Definition der Abmessungen der Öffnung 2 heranzuziehen. Erfindungsgemäß ist es daher vorgesehen, dass ein Anlageteil 4 im Bereich der Öffnung 2 mit dem Träger 3 verbunden ist. Diese Verbindung kann beispielsweise über herkömmliche Verbindungstechniken wie Nieten, Schrauben, Kleben oder dergleichen vorgesehen sein. Weiterhin ist es auch möglich, dass das Anlageteil 4 beispielsweise direkt in den Formgebungsprozess des Trägers 3 einbezogen wird, beispielsweise die direkt in eine Form zur Formgebung des Trägers 3 hineingelegt wird und bei der endgültigen Formgebung des Trägers 3 mit diesem befestigt bzw. verbünden wird. Erfindungsgemäß ist vorgesehen, dass zwischen dem Rand 6 bzw. der Schnittkante 6 des Trägers 3 und einer Vorderkante 5 des Anlageteils 4 ein Spalt 7 zum Toleranzausgleich verbleibt, welcher in Abhängigkeit von den tatsächlichen Abmessungen des Randes 6 bzw. der Schnittkante 6 des Trägers 3 mehr oder weniger groß ausfallen kann. Der Spalt 7 wird im Folgenden auch als Toleranzausgleichsabstand 7 bezeichnet. Das Anlageteil 4 ist erfindungsgemäß aus einem ersten Material hergestellt bzw. weist im Wesentlichen vollständig ein erstes Material auf. Dieses erstes Material ist insbesondere als ein Metallmaterial, insbesondere als ein Blechprägeteil oder dergleichen vorgesehen, welches mit vergleichsweise geringem Aufwand und mit etablierten Technologien mit einer im Vergleich zur Maßgenauigkeit des Trägers 3 erheblich kleineren Maßtoleranz bzw. einer erheblich größeren Genauigkeit hinsichtlich seiner Abmessung hergestellt werden kann. Hierdurch wird die vordere Kante 5 des Anlageteils, welche letztlich die Abmessungen der Öffnung 2 genau definiert zur Definition der Öffnung 2 herangezogen. Das Dekormaterial 31 wird um diese vordere Kante 5 des Anlageteils 4 im Bereich der Öffnung 2 umgebogen. Hierdurch entsteht ein ästhetisch ansprechender Übergang zwischen dem Ausstattungsteil 1 und beispielsweise dem elektrischen Schiebedach welches in die Öffnung 2 eingesetzt wird.

Erfindungsgemäß ist das Dekormaterial 31 mit einer in den Figuren 1 und 4 nicht dargestellten Schaumschicht oder dergleichen auszustatten. Diese Schaumschicht oder Polsterschicht ist Teil der Dekorlage bzw. des Dekörmaterials 31 im Bereich zwischen dem Dekörmaterial 31 und dem Trägerteil 3.

Das Anlageteil 4 ist im Bereich seiner Vorderkante 5 insbesondere L-förmig derart gebogen, dass der Umbug bzw. die Umbugkante 8 ohne eine Zerstörung des Dekormaterials 31 an der Vorderkante 5 des Anlageteils 4 möglich ist und dass das Dekormaterial 31 auf der Rückseite 12 gut und sicher zur Bildung des Umbugs bzw. der Umbugkante 8 befestigt werden kann.

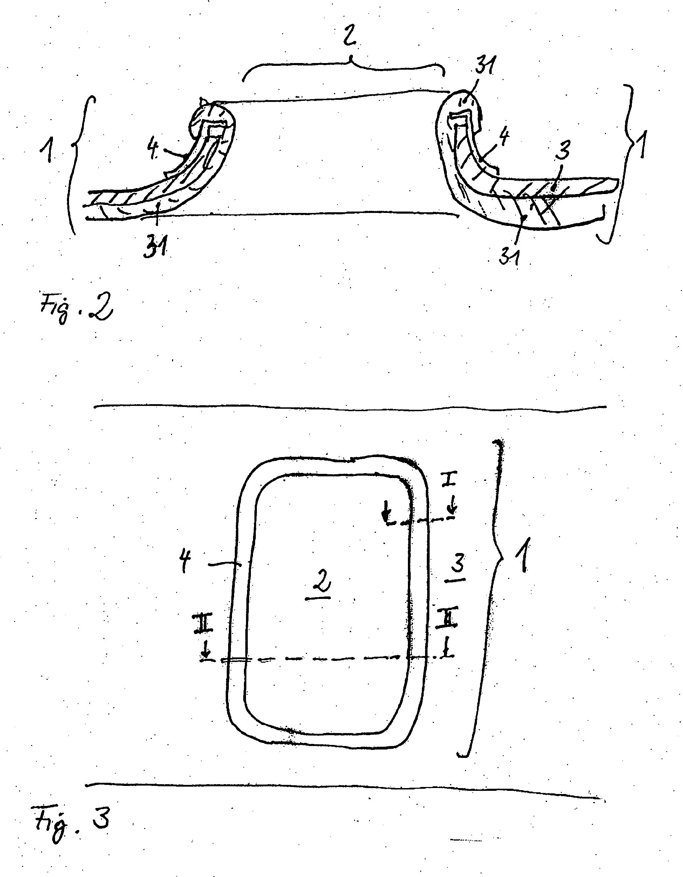

In der Figur 3 ist eine schematische Draufschicht auf ein Fahrzeugdach mit einer Öffnung 2 dargestellt, welche in einem Dachhimmel 1 als Beispiel eines Ausstattungsteils 1 für ein Kraftfahrzeug dargestellt ist, eingebracht ist. Um die Öffnung 2 ist rahmenfömig umlaufend das Anlageteil 4 schematisch dargestellt.

In Figur 2 ist eine weitere Schnittdarstellung durch das Ausstattungsteil 1 dargestellt, wobei beide Seiten der Öffnung 2 in der Schnittdarstellung berücksichtigt sind.

Die Darstellung der Figur 2 kann als ein Schnitt entlang der Schnittlinie II aufgefaßt werden, während die Darstellung der Figur 1 bzw. der Figur 4 als eine Schnittdarstellung entlang der Schnittlinie 1 in Figur 3 aufgefaßt werden können.

### Bezugszeichenliste

- 1: Ausstattungsteil
- 2: Öffnung
- 3: Träger
- 4: Anlageteil
- 5: Vorderkante
- 6: Rand
- 7: Toleranzausgleichsabstand
- 8: Umbugkante
- 11: Sichtseit
- 12: Rückseite
- 31: Dekormaterial

## Patentansprüche

1. Ausstattungsteil (1) für ein Kraftfahrzeug, insbesondere Kraftfahrzeuginnenausstattungsteil, wobei das Ausstattungsteil (1) eine Sichtseite (11) und eine Rückseite (12) aufweist, wobei das Ausstattungsteil (1) einen Träger (3) umfasst, wobei das Ausstattungsteil (1) auf der Sichtseite (11) ein Dekormaterial (31) aufweist, wobei der Träger (3) eine Öffnung (2) aufweist und wobei das Dekormaterial (31) Im Bereich der Öffnung (2) auf die Rückseite (12) des Ausstattungstells (1) eine Umbugkante (8) bildend umgebogen vorgesehen ist, wobei im Bereich der Öffnung (2) ein mit dem Träger (3) verbundenes Anlageteil (4) vorgesehen ist, wobei das Anlageteil (4) zur Bildung der Umbugkante (8) des Dekormaterials (31) vorgesehen ist, **dadurch gekennzeichnet, dass** das Dekormaterial (31) eine Schicht aus einem Schaummaterial aufweist, wobei das Anlageteil (4) aus einem ersten Material und der Träger (3) des Ausstattungsteils (1) aus einem zweiten Material vorgesehen ist, wobei übliche Maßtoleranzen für das erste Material kleiner sind als für das zweite Material, wobei das zweite Material ein Kunststoffmaterial mit einem Faseranteil von natürlichen oder künstlichen Fasern ist,

2. Ausstattungsteil (1) nach Anspruch 1, **dadurch gekennzeichnet, dass** das Anlageteil (4) rahmenförmig an der Öffnung (2) umlaufend vorgesehen ist.

3. Ausstattungsteil (1) nach einem der vorhergehenden Ansprüchen, **dadurch gekennzeichnet, dass** zwischen dem Rand (6) des Trägers (3) im Bereich der Öffnung (2) und dem Anlageteil (4) ein Toleranzausgleichsabstand (7) vorgesehen ist.

4. Ausstattungsteil (1) nach einem der vorhergehenden Ansprüchen, **dadurch gekennzeichnet, dass** das Anlageteil (4) im Querschnitt im wesentlichen L-förmig vorgesehen ist.

5. Ausstattungsteil (1) nach einem der vorhergehenden Ansprüchen, **dadurch gekennzeichnet, dass** das erste Material ein Metallmaterial ist, insbesondere gestanztes Metallmaterial.

6. Ausstattungsteil (1) nach einem der vorhergehenden Ansprüchen, **dadurch gekennzeichnet, dass** das Ausstattungsteil (1) ein Dachhimmel eines Fahrzeugs ist.

7. Ausstattungsteil (1) nach einem der vorhergehenden Ansprüchen, **dadurch gekennzeichnet, dass** die Öffnung (2) eine Öffnung für ein Fahrzeugschiebedach ist

## Claims

1. A fitting (1) for a motor vehicle, in particular an interior fitting for a motor vehicle, wherein the fitting (1) exhibits a visible side (11) and a rear side (12), wherein the fitting (1) comprises a support (3), wherein the fitting (1) has a decorative material (31) on the visible side (11), wherein the support (3) comprises an opening (2), and wherein the decorative material (31) is provided with a foldback (8) formed as a bending in the region of the opening (2) on the rear side (12) of the fitting (1), wherein a unit part (4) connected to the support (3) is provided in the region of the opening (2), wherein the unit part (4) is provided to form the foldback (8) of the decorative material (31), **characterized in that** the decorative material (31) comprises a layer made of a foam material, wherein the unit part (4) is provided from a first material and the support (3) of the fitting (1) provided from a second material, wherein general dimensional tolerances are lower for the first material than for the second material, wherein the second material is a plastic material having a fiber content of natural or synthetic fibers.

2. The fitting (1) according to claim 1, **characterized in that** the unit part (4) is provided at the opening (2) in the form of a circumferential frame.

3. The fitting (1) according to one of the preceding claims, **characterized in that** a tolerance compensating clearance (7) is provided between the edge (6) of the support (3) in the region of the opening (2) and unit part (4).

4. The fitting (1) according to any one of the preceding claims, **characterized in that** the unit part (4) is substantially L-shaped in cross section.

5. The fitting (1) according to any one of the preceding claims, **characterized in that** the first material is a metal material, particularly a stamped metal material.

6. The fitting (1) according to any one of the preceding claims, **characterized in that** the fitting (10) is a vehicle roof liner.

7. The fitting (1) according to any one of the preceding claims, **characterized in that** the opening (2) is an opening for a vehicle sliding roof.

## Revendications

1. Élément d'équipement (1) pour un véhicule automobile, en particulier élément d'équipement intérieur, dans lequel l'élément d'équipement (1) présente un côté visible (11) et un côté postérieur (12), ledit élément d'équipement (1) comprenant un support (3), l'élément d'équipement (1) comprenant un matériau de décoration (31) sur le côté visible (11), le support (3) comportant une ouverture (2), et le matériau de décoration (31) est prévu sous forme cintrée dans la région de l'ouverture (2) du côté postérieur (12) de l'élément d'équipement (1) en formant une arête de [] (8), dans lequel une partie d'appui (4) reliée au support (3) est prévue dans la région de l'ouverture (2), ladite partie d'appui (4) étant prévue pour réaliser l'arête de [] (8) du matériau de décoration (31), **caractérisé en ce que** le matériau de décoration (31) comprend une couche d'un matériau en mousse, dans lequel la partie d'appui (4) est prévue en un premier matériau et le support (3) de l'élément d'équipement (1) est prévu en un second matériau, et les tolérances dimensionnelles habituelles pour le premier matériau sont plus faibles que pour le second matériau, et dans lequel le second matériau est une matière plastique avec une proportion de fibres naturelles ou artificielles.

2. Élément d'équipement (1) selon la revendication 1, **caractérisé en ce que** la partie d'appui (4) est prévue en périphérie au niveau de l'ouverture (2) sous forme de cadre.

3. Élément d'équipement (1) selon l'une des revendications précédentes, **caractérisé en ce qu'**il est prévu une distance de compensation de tolérance entre la bordure (6) du support (3) dans la région de l'ouverture (2) et la partie d'appui (4).

4. Élément d'équipement (1) selon l'une des revendications précédentes, **caractérisé en ce que** la partie d'appui (4) est prévue avec une section transversale sensiblement en forme de L.

5. Élément d'équipement (1) selon l'une des revendications précédentes, **caractérisé en ce que** le premier matériau est un matériau métallique, en particulier un matériau métallique poinçonné.

6. Élément d'équipement (1) selon l'une des revendications précédentes, **caractérisé en ce que** l'élément d'équipement (1) est un ciel de toiture d'un véhicule automobile

7. Élément d'équipement (1) selon l'une des revendications précédentes, **caractérisé en ce que** l'ouverture (2) est une ouverture pour un toit coulissant de véhicule.
